# EUROPÄISCHE PATENTSCHRIFT

(11) **EP 3 287 056 B1**
(45) Veröffentlichungstag und Bekanntmachung des Hinweises auf die Patenterteilung: **17.04.2019**
(21) Anmeldenummer: 17185852.5
(22) Anmeldetag: 11.08.2017
(51) Int. Cl.: A47J 43/07

(54) **MULTIFUNKTIONALE KUPPLUNGSEINRICHTUNG FÜR EINE KÜCHENMASCHINE**
MULTIFUNCTIONAL COUPLING DEVICE FOR A KITCHEN APPLIANCE
DISPOSITIF D'ACCOUPLEMENT MULTIFONCTION POUR UN BROYEUR À USAGES MULTIPLES

(30) Priorität: 26.08.2016 DE 102016216105
(43) Veröffentlichungstag der Anmeldung: 28.02.2018
(73) Patentinhaber: BSH Hausgeräte GmbH, 81739 München (DE)
(72) Erfinder: Kovacic, Peter, 3303 Gomilsko (SI); Strojansek, Aleksander, 3331 Nazarje (SI); Ivanusic, Marko, 1000 Ljubljana (SI); Cater, Matej, 3301 Petrovce (SI)

(56) Entgegenhaltungen:
- WO-A1-2009/153250
- WO-A1-2012/110428
- CN-A- 105 167 653
- CN-B- 102 973 171
- DE-U1-202006 014 231
- US-A1- 2015 230 480

## Beschreibung

### Gebiet der Erfindung

Die Erfindung betrifft eine Kupplungseinrichtung für eine Küchenmaschine sowie eine Küchenmaschine mit einer derartigen Kupplungseinrichtung. Darüber hinaus betrifft die Erfindung einen Antriebskopf zum Antrieb eines Werkzeugs in einer Küchenmaschine.

### Hintergrund der Erfindung

Kupplungseinrichtungen sind in Küchenmaschinen zum Ankoppeln und zum Antrieb von Werkzeugen vorgesehen. Meist sind derartige Kupplungseinrichtungen im Arm der Küchenmaschine oberhalb der Rührschüssel angeordnet, um beispielsweise Rühr- und Knetwerkzeuge anzutreiben.

In der internationalen Patentanmeldung WO 2009/153250 A1 ist eine Küchenmaschine mit einer Antriebseinrichtung und einer Werkzeuganordnung beschrieben, die insbesondere zum Kneten von Teig ausgebildet ist. Die Küchenmaschine weist ein erstes Werkzeug auf, welches mittels seines Schaftes um eine erste Drehachse drehend mit der Antriebseinrichtung der Küchenmaschine gekuppelt ist. Darüber hinaus weist die Werkzeuganordnung ein zweites Werkzeug auf, welches im Bereich des Schaftes des ersten Werkzeuges angeordnet ist. Dabei kann es sich bei dem zweiten Werkzeug beispielsweise um einen Knetflügel handeln, der drehend mit der Antriebseinrichtung der Küchenmaschine gekuppelt ist. Insbesondere kann das zweite Werkzeug mittels einer lösbaren Kupplungseinrichtung, insbesondere einer Bajonettkupplung, mit der Antriebseinrichtung verbindbar sein.

Das deutsche Gebrauchsmuster DE 20 2006 014 231 U1 beschreibt ein elektromotorisches Küchengerät, insbesondere eine elektromotorische Solo- oder Universalküchenmaschine, mit einem Elektromotor und einer Getriebestufe, wobei der Elektromotor ein Motorgehäuse und die Getriebestufe ein Getriebegehäuse aufweist. Dabei sind das Motorgehäuse und das Getriebegehäuse mit Hilfe eines Bajonettverschlusses miteinander verbunden. Das Küchengerät weist einen Gerätekopf auf.

### Der Erfindung zugrundeliegende Aufgabe

Es ist Aufgabe der Erfindung, eine Kupplungseinrichtung für eine Küchenmaschine zur Verfügung zu stellen, wobei die Kupplungseinrichtung eine flexible Ankopplung von unterschiedlichen Werkzeugen und Zubehörteilen ermöglicht. Insbesondere ist es Aufgabe der Erfindung, bei der Ankopplung von Zubehörteilen eine Möglichkeit zum Antreiben einer Eingangswelle des Zubehörteils bereitzustellen.

### Erfindungsgemäße Lösung

Die Lösung der gestellten Aufgabe gelingt durch Bereitstellen einer Kupplungseinrichtung für eine Küchenmaschine, wobei die Kupplungseinrichtung einen Antriebskopf aufweist, der mit einer abtriebsseitigen Welle der Küchenmaschine verbunden ist. Die Kupplungseinrichtung umfasst ein ganz oder teilweise um den Antriebskopf herum angeordnetes ortsfestes Anschlussstück zur mechanischen Kopplung eines Zubehörteils mit der Kupplungseinrichtung. Der Antriebskopf weist einen ersten Bajonettanschluss zur drehfesten Kupplung des Antriebskopfes mit einem Werkzeug auf. Außerdem weist der Antriebskopf ein Mitnahmeprofil auf.

Die Kupplungseinrichtung ermöglicht eine Vielzahl von unterschiedlichen Möglichkeiten, Werkzeuge und Zubehörteile an die Kupplungseinrichtung anzuschließen und ist insofern multifunktional verwendbar. Zum einen weist der Antriebskopf einen ersten Bajonettanschluss zur Kupplung des Antriebskopfes mit einem Werkzeug auf. Auf diese Weise kann ein Werkzeug unmittelbar auf den Antriebskopf aufgesetzt und mittels des ersten Bajonettanschlusses mit dem Antriebskopf drehfest gekoppelt werden. Das jeweilige Werkzeug kann dann durch den Antriebskopf um die zentrale Symmetrieachse der Kopplungseinrichtung rotierend angetrieben werden. Bei dem Werkzeug kann es sich beispielsweise um einen Knetflügel, einen Teigspatel oder um einen Rührlöffel handeln, welche innerhalb der Rührschüssel um die zentrale Drehachse mit vergleichsweise geringer Geschwindigkeit rotieren. Darüber hinaus ist die Kupplungseinrichtung aber nicht nur zum direkten Antreiben von Werkzeugen ausgebildet, sondern dient darüber hinaus zum Anschluss von Zubehörteilen. Zum Anschluss der Zubehörteile weist die Kupplungseinrichtung ein ganz oder teilweise um den Antriebskopf herum angeordnetes, ortsfestes Anschlussstück auf, an das die Zubehörteile mechanisch angekoppelt werden. Um den jeweiligen Zubehörteilen ein geeignetes Antriebsdrehmoment zur Verfügung stellen zu können, weist der Antriebskopf ein Mitnahmeprofil auf. Bei der mechanischen Ankopplung des jeweiligen Zubehörteils kann das Mitnahmeprofil des Antriebskopfes in eine entsprechende Passungsaufnahme auf Seiten des Zubehörteils eingreifen, die ihrerseits eine Eingangswelle des Zubehörteils antreiben kann. Dadurch kann der Antriebskopf zum Antrieb einer Eingangswelle des jeweiligen Zubehörteils genutzt werden, sodass mittels der erfindungsgemäßen Kupplungseinrichtung sowohl eine stabile mechanische Ankopplung des jeweiligen Zubehörteils, als auch eine geeignete Drehmomentübertragung zum Zubehörteil ermöglicht wird.

Zusammenfassend bietet die Kupplungseinrichtung folgende Ankoppelmöglichkeiten: Ein Werkzeug kann unmittelbar mittels des ersten Bajonettanschlusses auf den Antriebskopf aufgesteckt und mit dem Antriebskopf drehfest verbunden werden. Des Weiteren können Zubehörteile mechanisch mit dem Anschlussstück gekoppelt werden, wobei zusätzlich die Möglichkeit geschaffen wird, über das Mitnahmeprofil des Antriebskopfes eine Eingangswelle des Zubehörteils anzutreiben. Darüber hinaus besteht beispielsweise die Möglichkeit, in dem Antriebskopf eine Aufnahme für einen Planetenantrieb zu integrieren, mit dem beispielsweise ein Knet- oder Rührwerkzeug rotierbar angetrieben werden kann.

Eine erfindungsgemäße Küchenmaschine umfasst eine Kupplungseinrichtung wie oben beschrieben. Durch die vielfältigen Ankoppelmöglichkeiten für Werkzeuge und Zubehörteile werden die Nutzungsmöglichkeiten der Küchenmaschine erweitert. Durch die einfache Ankoppelmöglichkeit für Zusatzteile wie beispielsweise einen Fleischwolf, einen Pastavorsatz, etc., oder langsam rotierende Werkzeuge wie Rührlöffel, Knetflügel, etc. wird die Attraktivität für den Nutzer verbessert.

Ein erfindungsgemäßer Antriebskopf zum Antrieb eines Werkzeugs in einer Küchenmaschine weist einen ersten Bajonettanschluss zur drehfesten Kupplung des Antriebskopfes mit dem Werkzeug auf. Der Antriebskopf weist ein Mitnahmeprofil mit einer Mehrzahl von Zähnen auf, wobei der erste Bajonettanschluss Führungsnuten zur Kopplung mit dem Werkzeug umfasst, wobei die Führungsnuten in den Zähnen des Mitnahmeprofils ausgebildet sind.

Der erfindungsgemäße Antriebskopf erfüllt eine Doppelfunktion. Er stellt zum einen einen ersten Bajonettanschluss zum Ankoppeln von Werkzeugen zur Verfügung und ermöglicht außerdem über das Mitnahmeprofil einen Eingriff in eine Eingangswelle eines Zubehörteils, um die Eingangswelle rotierend antreiben zu können. Dieser Doppelfunktion kann bei der Ausgestaltung des Antriebskopfes dadurch Rechnung getragen werden, indem in den Zähnen des Mitnahmeprofils Führungsnuten des ersten Bajonettanschlusses ausgebildet sind, die eine Verrastung mit entsprechenden Rastnasen des Werkzeugs ermöglichen. Das Mitnahmeprofil dient zum Herstellen eines formschlüssigen Eingriffs mit einer anderen Welle, wohingegen die in den Zähnen vorgesehenen Führungsnuten zur Ausbildung einer drehfesten Bajonettverbindung mit einem unmittelbar auf den Antriebskopf aufgesteckten Werkzeug dienen. Auf diese Weise lassen sich die beiden funktionellen Anforderungen baulich in einem Antriebskopf integrieren.

### Bevorzugte Ausgestaltungen der Erfindung

Vorzugsweise ist das ortsfeste Anschlussstück als den Antriebskopf umschließender Anschlussring ausgebildet. Die Ausbildung des Anschlussstücks als Anschlussring ermöglicht eine symmetrische Auslegung der Kupplungseinrichtung und schützt den Antriebskopf darüber hinaus vor Nahrungsmittelresten. Der Anschlussring dient in erster Linie zum Anschluss von Zubehörteilen, die mit dem Anschlussring mechanisch gekoppelt werden. Die Befestigung der Zubehörteile am Anschlussring ermöglicht eine gleichmäßige, stabile Befestigung des jeweiligen Zubehörteils von allen Seiten.

Vorzugsweise ist der Anschlussring konzentrisch zum Antriebskopf ausgebildet und umschließt den Antriebskopf rundum. Die konzentrische Auslegung von Antriebskopf und Anschlussring ermöglicht eine kompakte Auslegung der Kupplungseinrichtung und ist darüber hinaus auch unter dem Gesichtspunkt der Vermeidung von Unwuchten und Vibrationen beim Ankoppeln von Zubehörteilen vorteilhaft.

Vorzugsweise ist das Mitnahmeprofil dazu ausgebildet, eine drehfeste Kupplung des Antriebskopfes mit einer Welle eines Zubehörteils auszubilden. Das Mitnahmeprofil des Antriebskopfes ermöglicht einen formschlüssigen Eingriff mit einer hierzu komplementär ausgebildeten Passungsaufnahme. Durch diesen Eingriff zwischen dem Mitnahmeprofil des Antriebskopfes und der Passungsaufnahme wird eine drehfeste Kupplung zwischen dem Antriebskopf und der Passungsaufnahme und damit eine zuverlässige Drehmomentübertragung ermöglicht.

Vorzugsweise handelt es sich bei dem Mitnahmeprofil um ein sternförmiges Mitnahmeprofil. Der Einsatz eines sternförmigen Mitnahmeprofils im Antriebskopf ermöglicht insbesondere bei flacher Auslegung der Flanken der Zähne einen zuverlässigen Eingriff mit einer Passungsaufnahme, bei der die mechanische Belastung und die Abnutzung der einzelnen Zähne infolge von hertzscher Belastung bei der Drehmomentübertragung vergleichsweise gering gehalten werden kann. Darüber hinaus bietet die Verwendung eines sternförmigen Mitnahmeprofils den Vorteil, dass das Mitnahmeprofil in vielen unterschiedlichen Winkelpositionen relativ zu der zugehörigen Passungsaufnahme mit der Passungsaufnahme in Eingriff gebracht werden kann. Dadurch wird das Einstecken des Mitnahmeprofils in die Passungsaufnahme vereinfacht.

Vorzugsweise weist das Mitnahmeprofil eine Mehrzahl von Zähnen zur drehfesten Kupplung mit einer Welle eines Zubehörteils auf. Je höher die Zahl der Zähne des Mitnahmeprofils ist, umso höher ist die Zahl der möglichen Winkelpositionen, in denen das Mitnahmeprofil mit der Passungsaufnahme in Eingriff gebracht werden kann.

Vorzugsweise umfasst der erste Bajonettanschluss am oder im Antriebskopf angeordnete Führungsnuten, die dazu ausgelegt sind, mit einem auf den Antriebskopf aufgesteckten Werkzeug eine erste Bajonettverbindung auszubilden. Hierzu wird das Werkzeug auf den Antriebskopf aufgesteckt und dann relativ zum Antriebskopf verdreht, wobei eine erste Bajonettverbindung zwischen dem Werkzeug und dem Antriebskopf ausgebildet wird. Infolge dieser drehfesten Kupplung zwischen Werkzeug und Antriebskopf kann das Werkzeug durch den Antriebskopf angetrieben werden und um die zentrale Symmetrieachse der Kupplungseinrichtung rotieren.

Vorzugsweise weist das Mitnahmeprofil eine Mehrzahl von Zähnen auf, wobei der erste Bajonettanschluss Führungsnuten umfasst, die sich in die Zähne des Mitnahmeprofils hinein erstrecken. Der Antriebskopf der vorliegenden Kupplungseinrichtung erfüllt eine Doppelfunktion. Zum einen erfolgt über das Mitnahmeprofil des Antriebskopfes eine Drehmomentübertragung an eine angekoppelte andere Welle. Darüber hinaus weist der Antriebskopf auch einen ersten Bajonettverschluss auf, der zur Ausbildung einer drehfesten Kupplung mit einem aufgesteckten Werkzeug ausgebildet ist. Diese beiden Funktionen werden bei der vorliegenden Ausführung dadurch miteinander vereinbart, indem sich die Führungsnuten für den Bajonettanschluss in die Zähne des Mitnahmeprofils hinein erstrecken.

Vorzugsweise weist das Mitnahmeprofil eine Mehrzahl von Zähnen auf, wobei die Zähne jeweils Führungsnuten zur Aufnahme von Rastnasen eines aufgesteckten Werkzeugs aufweisen. Das Werkzeug wird aufgesteckt und relativ zum Antriebskopf verdreht, wobei die Rastnasen des aufgesteckten Werkzeugs seitlich in die Führungsnuten eingeschoben werden, um auf diese Weise eine erste Bajonettverbindung zwischen dem Antriebskopf und dem aufgesteckten Werkzeug auszubilden. Auf diese Weise wird eine drehfeste Kupplung zwischen Antriebskopf und Werkzeug ermöglicht.

Vorzugsweise ist auf den Antriebskopf der Kupplungseinrichtung ein Werkzeug aufsteckbar, wobei über den ersten Bajonettanschluss des Antriebskopfes eine drehfeste Kupplung zwischen dem Antriebskopf und dem Werkzeug ausbildbar ist. Auf diese Weise kann der Antriebskopf zum Antrieb eines unmittelbar auf den Antriebskopf aufgesteckten Werkzeugs dienen, das angetrieben durch den Antriebskopf um die zentrale Symmetrieachse der Kupplungseinrichtung rotiert.

Vorzugsweise umfasst die Kupplungseinrichtung zusätzlich ein auf den Antriebskopf aufgestecktes Werkzeug, wobei über den ersten Bajonettanschluss des Antriebskopfes eine drehfeste Kupplung zwischen dem Antriebskopf und dem Werkzeug ausbildbar ist.

Vorzugsweise weist das Werkzeug eine topfförmige Nabe auf, die dazu ausgebildet ist, auf den Antriebskopf aufgesteckt zu werden. Mit Hilfe der topfförmigen Nabe kann das Werkzeug auf den Antriebskopf aufgesteckt und mit dem Antriebskopf drehfest verbunden werden.

Vorzugsweise weist das Werkzeug eine Mehrzahl von an der Innenseite der topfförmigen Nabe angeordneten Rastnasen auf, welche dazu ausgelegt sind, in Führungsnuten des Antriebskopfes einzugreifen, wobei über die Rastnasen und die Führungsnuten eine erste Bajonettverbindung zwischen dem Antriebskopf und dem Werkzeug ausbildbar ist. Das Werkzeug mit der topfförmigen Nabe wird auf den Antriebskopf aufgesteckt und relativ zum Antriebskopf verdreht. Dabei kommen die Rastnasen in Eingriff mit den Führungsnuten des Antriebskopfes.

Vorzugsweise handelt es sich bei dem Mitnahmeprofil um ein Mitnahmeprofil mit einer Mehrzahl von Zähnen, und die topfförmige Nabe weist an ihrer Innenwandung eine Mehrzahl von in Längsrichtung verlaufenden Rippen auf, die dazu ausgelegt sind, beim Aufstecken der topfförmigen Nabe auf das Mitnahmeprofil des Antriebskopfes in entsprechende Zwischenräume zwischen den Zähnen des Mitnahmeprofils einzugreifen. Durch den Eingriff der Rippen in die Zwischenräume zwischen den Zähnen wird das eingesteckte Werkzeug insbesondere in Längsrichtung stabilisiert, wodurch die Aufnahme von Kräften durch das Werkzeug verbessert wird.

Vorzugsweise handelt es sich bei dem Werkzeug um eines von folgenden: einen Knetflügel, einen Teigschaber, einen Rührlöffel. All diese Werkzeuge rotieren mit vergleichsweise langsamer Drehgeschwindigkeit um die zentrale Symmetrieachse der Kupplungseinrichtung und werden daher vorteilhafterweise durch den zentralen Antriebskopf angetrieben.

Vorzugsweise weist das ortsfeste Anschlussstück einen zweiten Bajonettanschluss zur ortsfesten Kupplung des ortsfesten Anschlussstücks mit einem aufgesteckten Zubehörteil auf. Um die auf das Zubehörteil einwirkenden Kräfte aufnehmen zu können. muss das Zubehörteil stabil mit der Kupplungseinrichtung verbunden werden. Hierzu ist an dem ortsfesten Anschlussstück der zweite Bajonettanschluss vorgesehen, mit dem das Zubehörteil an der Kupplungseinrichtung fixiert wird.

Vorzugsweise ist das ortsfeste Anschlussstück als den Antriebskopf umschließender Anschlussring ausgebildet, wobei der Anschlussring einen zweiten Bajonettanschluss aufweist, der an der Außenseite des Anschlussrings angeordnete Bolzen umfasst, die dazu ausgelegt sind, mit einem aufgesteckten Zubehörteil eine zweite Bajonettverbindung auszubilden. Der Anschlussring ermöglicht eine stabile allseitige Fixierung des Zubehörteils. Die Bolzen greifen in entsprechende Ausnehmungen des Zubehörteils ein, wodurch die zweite Bajonettverbindung zwischen dem Anschlussring und dem Zubehörteil ausgebildet ist.

Vorzugsweise ist an die Kupplungseinrichtung ein Zubehörteil anschließbar, wobei das Zubehörteil mit dem ortsfesten Anschlussstück der Kupplungseinrichtung mechanisch koppelbar ist. Das ortsfeste Anschlussstück dient zur stabilen mechanischen Fixierung des Zubehörteils.

Vorzugsweise ist das Mitnahmeprofil des Antriebskopfes dazu ausgelegt, bei der mechanischen Kopplung des Zubehörteils mit dem Anschlussstück in eine zugehörige Passungsaufnahme des Zubehörteils einzugreifen. Zusätzlich zur mechanischen Kopplung des Zubehörteils mit dem Anschlussstück wird ein Eingriff zwischen dem Mitnahmeprofil und der Passungsaufnahme des Zubehörteils ausgebildet. Auf diese Weise wird eine Drehmomentübertragung vom Antriebskopf zum Zubehörteil ermöglicht.

Vorzugsweise umfasst die Kupplungseinrichtung zusätzlich ein Zubehörteil, das mit dem ortsfesten Anschlussstück mechanisch gekoppelt ist, wobei das Zubehörteil eine Passungsaufnahme aufweist, und wobei das Mitnahmeprofil des Antriebskopfes dazu ausgelegt ist, bei der mechanischen Kopplung des Zubehörteils mit dem Anschlussstück in die Passungsaufnahme des Zubehörteils einzugreifen. Vorzugsweise ist das Zubehörteil über eine zweite Bajonettverbindung mit dem zweiten Bajonettanschluss des Anschlussstücks mechanisch gekoppelt.

Vorzugsweise handelt es sich bei dem Zubehörteil um ein Adaptergetriebe, das mit dem ortsfesten Anschlussstück mechanisch koppelbar ist. Das Adaptergetriebe kann beispielsweise zum Antriebe weiterer Zubehörteile dienen. Dabei kann innerhalb des Adaptergetriebes beispielsweise eine Übersetzung oder eine Untersetzung der vom Antriebskopf bereitgestellten Umdrehungszahl erfolgen. Darüber hinaus kann das Adaptergetriebe dazu ausgebildet sein, die Richtung des vom Antriebskopf bereitgestellten Drehmoments zu ändern.

Vorzugsweise ist das Adaptergetriebe als Winkelgetriebe ausgebildet. Von vielen Zubehörteilen wie beispielsweise Pastavorsatz, Fleischwolf, etc. wird eine in horizontaler Richtung verlaufende Eingangswelle benötigt. Die Kupplungseinrichtung stellt jedoch ein Drehmoment mit senkrechter Drehachse zur Verfügung. Aufgabe des Adaptergetriebes ist es, das in senkrechter Richtung bereitgestellte Drehmoment in die Horizontale umzulenken.

Vorzugsweise ist das Adaptergetriebe zum Antrieb von mindestens einem von folgenden ausgelegt: einem Pastavorsatz, einem Fleischwolf, einer Nussreibe. Von all diesen Zubehörteilen wird eine in horizontaler Richtung verlaufende Eingangswelle benötigt.

Vorzugsweise ist im Antriebskopf eine rotierbar gelagerte Aufnahme angeordnet, die durch einen Planetenantrieb antreibbar ist und in die ein Werkzeug einsteckbar ist. Die rotierbar gelagerte Aufnahme im Antriebskopf kann beispielsweise zum Antrieb von Rühr- und Knetwerkzeugen dienen, die durch einen Planetenantrieb angetrieben werden. Derartige Werkzeuge führen gleichzeitig eine Rotation um die eigene Achse und eine Drehbewegung um die zentrale Symmetrieachse der Kupplungseinrichtung aus. Vorzugsweise ist im Antriebskopf eine rotierbar gelagerte Aufnahme für ein Werkzeug angeordnet, wobei die rotierbare Aufnahme mit einem Planetenrad einer Planetengetriebestufe verbunden ist.

Vorzugsweise ist der Antriebskopf mit einem Planetenträger einer Planetengetriebestufe verbunden oder an einen Planetenträger einer Planetengetriebestufe angeformt. Durch die Verbindung mit dem Planetenträger wird der Antriebskopf in eine Rotation um die zentrale Symmetrieachse der Kupplungseinrichtung versetzt. Dabei wird durch den massiven Planetenträger eine stabile Lagerung des Antriebskopfes ermöglicht.

Vorzugsweise ist der Antriebskopf mit einem Planetenträger einer Planetengetriebestufe verbunden oder an einen Planetenträger einer Planetengetriebestufe angeformt, und die im Antriebskopf rotierbar gelagerte Aufnahme ist durch ein Planetenrad der Planetengetriebestufe antreibbar. Insofern werden sowohl der zentrale Antriebskopf als auch die im Antriebskopf rotierbar gelagerte Aufnahme der Kupplungseinrichtung durch eine unmittelbar über der Kupplungseinrichtung angeordnete Planetengetriebestufe angetrieben, wobei der Planetenträger den Antriebskopf antreibt und wobei das Planetenrad die rotierbar gelagerte Aufnahme für Rühr- und Knetwerkzeuge antreibt.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1:: Fig. 1 zeigt eine Kupplungseinrichtung für eine Küchenmaschine.
- Figur 2:: Fig. 2 zeigt eine Planetengetriebestufe zum Antrieb der verschiedenen an die Kupplungseinrichtung anschließbaren Werkzeuge.
- Figur 3:: Fig. 3 zeigt ein durch den Antriebskopf der Kupplungseinrichtung antreibbares Werkzeug.
- Figur 4:: Fig. 4 zeigt das mittels einer ersten Bajonettverbindung mit dem Antriebskopf drehfest gekoppelte Werkzeug.
- Figur 5:: Fig. 5 zeigt einen Querschnitt durch die Kupplungseinrichtung auf Höhe der in Figur 1 und Figur 2 gezeigten Führungsnuten.
- Figur 6:: Fig. 6 zeigt ein Adaptergetriebe, das mittels einer zweiten Bajonettverbindung am ortsfesten Anschlussring der Kupplungseinrichtung fixierbar ist.
- Figur 7:: Fig. 7 zeigt, wie das Adaptergetriebe auf den ortsfesten Anschlussring der Kupplungseinrichtung aufgesteckt wird.
- Figur 8:: Fig. 8 zeigt ein an der Kupplungseinrichtung angebrachte Adaptergetriebe oder Zubehörteil, welches zusätzlich mittels eines Spannhebels fixiert ist.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

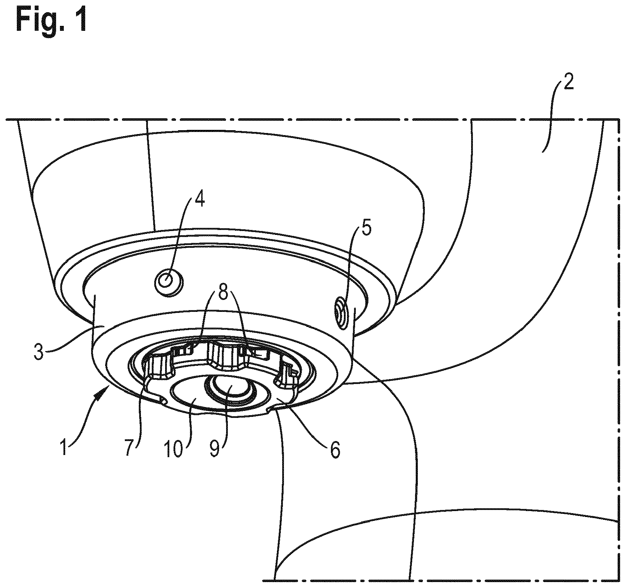

In Figur 1 ist eine Kupplungseinrichtung 1 für eine Küchenmaschine gezeigt, die an der Unterseite eines Arms 2 einer Küchenmaschine angeordnet ist. Die Kupplungseinrichtung 1 weist einen ortsfesten Anschlussring 3 zur Fixierung von Zubehörteilen auf, an dessen Außenseite beispielsweise Bolzen 4 und Einkerbungen 5 angebracht oder angeformt sein können. Vorzugsweise sind an der Außenseite des ortsfesten Anschlussrings 3 mindestens zwei Bolzen 4 und mindestens zwei Einkerbungen 5 vorgesehen. Die Bolzen 4 sind dazu ausgelegt, in entsprechende Ausnehmungen eines Zubehörteils einzugreifen, um das jeweilige Zubehörteil an der Unterseite des Arms 2 der Küchenmaschine zu fixieren. Beispielsweise kann mittels der Bolzen 4 eine Bajonettverbindung mit dem jeweiligen Zubehörteil ausgebildet werden. Zusätzlich können auf Seiten des Zubehörteils Einrastelemente vorgesehen sein, die beim Aufstecken des Zubehörteils in die Einkerbungen 5 der Kupplungseinrichtung 1 einrasten und das Zubehörteil so zusätzlich fixieren. Innerhalb des ortsfesten Anschlussrings 3 ist der Antriebskopf 6 drehbar gelagert, wobei der Antriebskopf 6 konzentrisch zum ortsfesten Anschlussring 3 ausgebildet ist. Der Antriebskopf 6 wird durch eine abtriebsseitige Ausgangswelle der Küchenmaschine angetrieben, vorzugsweise durch einen Planetenträger einer Planetengetriebestufe der Küchenmaschine. Der Antriebskopf 6 weist ein sternförmiges Mitnahmeprofil 7 mit einer Mehrzahl von Zähnen auf. Der Antriebskopf 6 kann insbesondere zum Antrieb von vergleichsweise langsam drehenden Werkzeugen eingesetzt werden. Beispielsweise kann der Antriebskopf 6 zum rotierenden Antrieb eines Knetflügels, eines Teigschabers oder eines Rührlöffels eingesetzt werden. Dabei kann die drehfeste Ankopplung der Werkzeuge mittels eines ersten Bajonettanschlusses erfolgen, wobei in Fig. 1 in den Zähnen des Mitnahmeprofils 7 entsprechende Führungsnuten 8 zur Ausbildung des ersten Bajonettanschlusses zu erkennen sind, in die das aufgesteckte Werkzeug einrastet. Im Antriebskopf 6 ist eine Aufnahme 9 des Planetenantriebs vorgesehen, die durch ein Planetenrad einer Planetengetriebestufe angetrieben wird und beispielsweise zum Antrieb von Rühr- und Knetwerkzeugen dient. Dieser für Küchenmaschinen typische Planetenantrieb von rotierbaren Werkzeugen wie Schneebesen, Knethaken etc. führt zu einer für den Planetenantrieb typischen kombinierten Drehbewegung des Werkzeugs, welche eine Eigenrotation um die eigene Achse und zusätzlich eine Drehbewegung des eingesteckten Werkzeugs um die zentrale Achse der Kupplungseinrichtung 1 umfasst. Zur Erleichterung des Einsteckens eines Werkzeugs in die Aufnahme 9 des Planetenantriebs ist an der Unterseite des Antriebskopfes 6 ein Führungstrichter 10 vorgesehen, über den das eingesteckte Werkzeug in die Aufnahme 9 eingeführt werden kann.

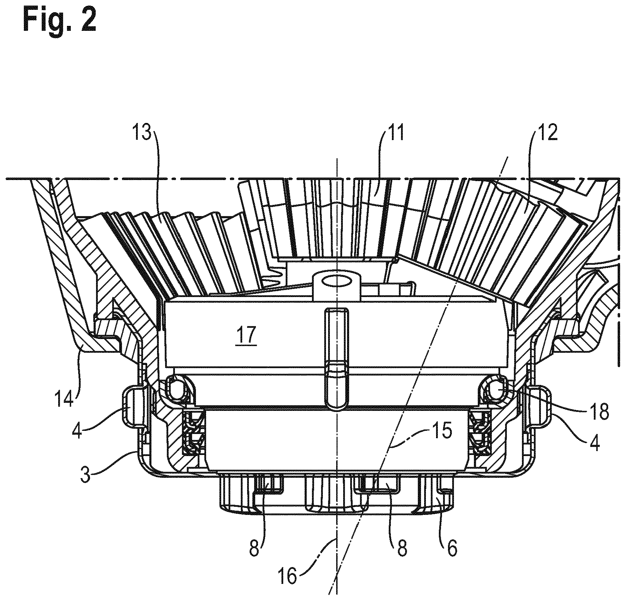

In Figur 2 ist die zum Antrieb der unterschiedlichen Werkzeuge vorgesehene Planetengetriebestufe im Längsschnitt gezeigt. Die Planetengetriebestufe umfasst ein zentrales Sonnenrad 11, das durch eine Antriebswelle der Getriebeeinheit rotierend angetrieben wird. Das Sonnenrad 11 steht im Eingriff mit einem als Kegelrad ausgebildeten Planetenrad 12, das seinerseits mit einem innenverzahnten Zahnkranz 13 an der Innenseite des Gehäuses 14 im Eingriff steht. Wenn das Planetenrad 12 durch das Sonnenrad 11 rotierend angetrieben wird, dann wälzt sich das Planetenrad 12 auf dem innenverzahnten Zahnkranz 13 ab und wird dadurch in eine Eigenrotation um die Drehachse 15 des Planetenantriebs versetzt. Infolge der Abwälzung des Planetenrads 12 auf dem innenverzahnten Zahnkranz 13 kommt es außerdem zu einer Umlaufbewegung der schrägen Drehachse 15 um die zentrale Symmetrieachse 16 des Getriebes und der Kupplungseinrichtung 1. Das Planetenrad 12 ist mit der Aufnahme 9 des Planetenantriebs verbunden und treibt ein eingestecktes Werkzeug an, beispielsweise ein Rühr- oder Knetwerkzeug. Das Planetenrad 12 ist an dem Planetenträger 17 drehbar gelagert. Durch die Abwälzung des Planetenrads 12 am innenverzahnten Zahnkranz 13 wird auch der Planetenträger 17 in Rotation um die zentrale Symmetrieachse 16 versetzt, wobei der Planetenträger 17 auf dem Kugellager 18 drehbar gelagert ist.

Der Antriebskopf 6 ist mit dem Planetenträger 17 verbunden oder an den Planetenträger 17 angeformt und wird durch den Planetenträger 17 rotierend angetrieben. Über den Antriebskopf 6 kann eine drehfeste Kupplung zu verschiedenen auf den Antriebskopf 6 aufsteckbaren Werkzeugen hergestellt werden, wobei die Kupplung mit den Werkzeugen über einen am Antriebskopf 6 vorgesehenen ersten Bajonettanschluss erfolgt. Beispielsweise können im sternförmigen Mitnahmeprofil 7 des Antriebskopfes 6 Führungsnuten 8 für den ersten Bajonettanschluss vorgesehen sein, in die entsprechende werkzeugseitige Rastnasen eingreifen können. Der Antriebskopf 6 ist ringsum von dem ortsfesten Anschlussring 3 umgeben, der konzentrisch zum Antriebskopf 6 ausgebildet ist. Der ortsfeste Anschlussring 3 ist mit dem Gehäuse 14 verbunden und dient insbesondere zur Befestigung und Fixierung von Zubehörteilen. An der Außenseite des ortsfesten Anschlussrings 3 ist eine Mehrzahl von Bolzen 4 zu erkennen, die dazu ausgebildet sind, in entsprechende Ausnehmungen auf Seiten eines Zubehörteils einzugreifen und das jeweilige aufgesteckte Zubehörteil so zu fixieren. Beispielsweise kann das jeweilige Zubehörteil mittels eines zweiten Bajonettanschlusses an dem ortsfesten Anschlussring befestigt werden, wobei die Bolzen 4 Teil des zweiten Bajonettanschlusses sind.

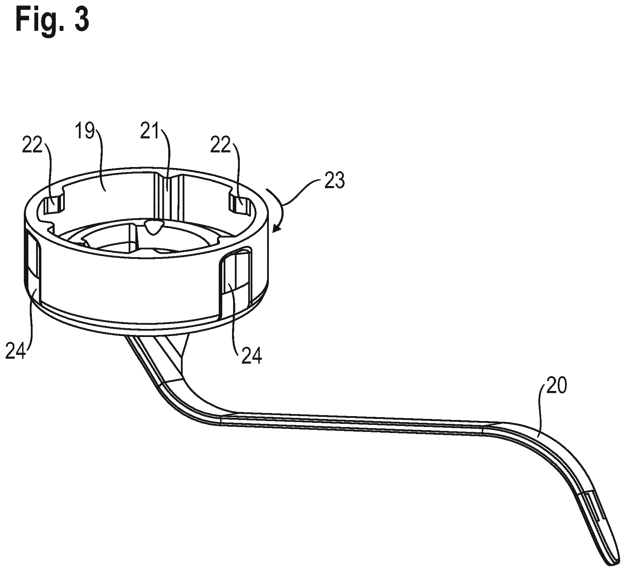

In Figur 3 ist ein Werkzeug gezeigt, das dazu ausgebildet ist, durch den Antriebskopf 6 der Kupplungseinrichtung 1 rotierend angetrieben zu werden. Zur Ausbildung einer drehfesten Kupplung mit dem Antriebskopf 6 der Kupplungseinrichtung 1 umfasst das in Figur 3 gezeigte Werkzeug eine topfförmige Nabe 19, die auf den Antriebskopf 6 aufsteckbar und am Antriebskopf 6 mittels einer ersten Bajonettverbindung fixierbar ist. An der topfförmigen Nabe 19 ist das eigentliche Werkzeug angebracht bzw. angeformt, wobei im Beispiel von Figur 3 ein Knetflügel 20 an der topfförmigen Nabe 19 angebracht ist. An der Innenwandung der topfförmigen Nabe 19 sind in Längsrichtung verlaufende Führungsrippen 21 vorgesehen, die beim Aufstecken der topfförmigen Nabe 19 auf den Antriebskopf 6 in die Lücken zwischen den Zähnen des sternförmigen Mitnahmeprofils 7 eingreifen. Darüber hinaus sind an der Innenwandung der topfförmigen Nabe 19 Rastnasen 22 vorgesehen. Beim Aufsetzen der topfförmigen Nabe 19 auf den Antriebskopf 6 werden die Rastnasen 22 zunächst ebenfalls in die Lücken zwischen den Zähnen des sternförmigen Mitnahmeprofils 7 eingeschoben. Anschließend wird die topfförmige Nabe 19 relativ zum Antriebskopf 6 entgegen der Rotationsrichtung des Antriebskopfs 6 verdreht, so dass die Rastnasen 22 von der Seite her in die Führungsnuten 8 eingeschoben werden und dort einrasten. Auf diese Weise wird eine erste Bajonettverbindung zwischen der topfförmigen Nabe 19 und dem Antriebskopf 6 hergestellt, wobei durch die erste Bajonettverbindung eine drehfeste Kupplung zwischen dem Antriebskopf 6 und dem Werkzeug hergestellt wird. Dabei ist es wichtig, das Werkzeug entgegen der Drehrichtung 23 des Antriebskopfes 6 in die Führungsnuten 8 einzurasten, damit das Werkzeug nicht aus dem Antriebskopf 6 herausgedreht wird, wenn der Knetflügel 20 auf einen Widerstand trifft. An der Außenseite der topfförmigen Nabe 19 sind Griffmulden 24 vorgesehen, mit denen der Benutzer das Werkzeug greifen und in die in Figur 1 gezeigte Kupplungseinrichtung 1 einsetzen kann.

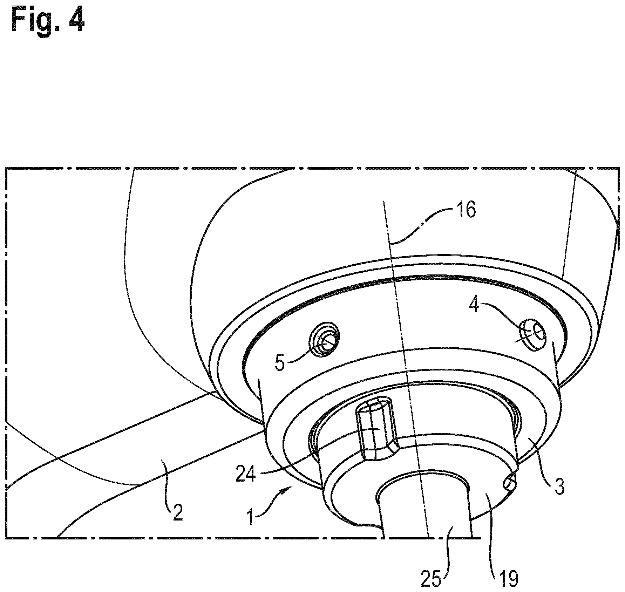

In Figur 4 ist die Kupplungseinrichtung 1 zusammen mit dem daran befestigten Werkzeug gezeigt, wobei das Werkzeug durch Aufstecken der topfförmigen Nabe 19 auf den Antriebskopf 6 und Verdrehen der topfförmigen Nabe 19 relativ zum Antriebskopf 6 mittels einer ersten Bajonettverbindung fixiert ist. Beim Aufstecken auf den Antriebskopf 6 wird die topfförmige Nabe 19 in den Spalt zwischen dem Antriebskopf 6 und dem ortsfesten Anschlussring 3 eingeschoben. Auf diese Weise wird eine drehfeste Kupplung zwischen dem Antriebskopf und dem Werkzeug ausgebildet, so dass der Schaft 25 des Werkzeugs durch den Antriebskopf 6 und damit durch den Planetenträger 17 rotierend angetrieben wird. In Figur 4 ist darüber hinaus auch zu erkennen, wie die Kupplungseinrichtung 1 an der Unterseite des Arms 2 der Küchenmaschine angeordnet ist. Außerdem sind in Figur 4 die Bolzen 4 und die Einkerbungen 5 zu erkennen, die an der Außenseite des ortsfesten Anschlussrings 3 angebracht oder angeformt sind.

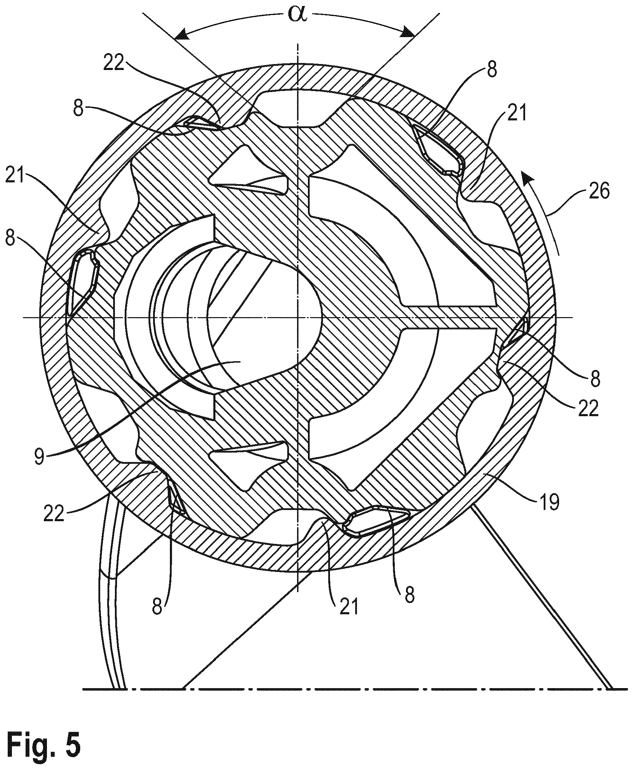

In Figur 5 ist ein Querschnitt der Kupplungseinrichtung 1 auf der Höhe der in Figur 1 und Figur 2 gezeigten Führungsnuten 8 dargestellt. In dem Querschnitt ist das sternförmige Mitnahmeprofil 7 des Antriebskopfes 6 zu erkennen, welches insgesamt sechs entlang des Umfangs angeordnete Zähne sowie zwischen den Zähnen befindliche Zwischenräume umfasst. Dabei sind die Flanken der Zähne des Mitnahmeprofils 7 in einem Winkel α relativ zueinander angeordnet. Dieser vergleichsweise flache Anstieg der Zahnflanken führt entsprechend den Prinzipien der Hertzschen Kontaktmechanik zu einer Verringerung der mechanischen Belastung der Zähne. Da der in Figur 5 gezeigte Querschnitt die Kupplungseinrichtung 1 auf der Höhe der Führungsnuten 8 zeigt, ist an jedem der Zähne eine entsprechende Führungsnut 8 zu erkennen. Darüber hinaus ist im Inneren des Antriebskopfes 6 die Aufnahme 9 des Planetenantriebs zu erkennen. Zusätzlich zum Antriebskopf 6 ist in Figur 5 auch die topfförmige Nabe 19 des Werkzeugs mit eingezeichnet, die mit dem sternförmigen Mitnahmeprofil 7 in Eingriff steht. Im Querschnitt von Figur 5 sind die drei in Längsrichtung verlaufenden Führungsrippen 21 zu erkennen, die jeweils mit einem zwischen zwei Zähnen befindlichen Zwischenraum des sternförmigen Mitnahmeprofils 7 in Eingriff stehen. Da sich die Führungsrippen 21 in Längsrichtung durch die topfförmige Nabe 19 erstrecken, können die Führungsrippen 21 nicht in die Führungsnuten 8 eingeschoben werden. Die ebenfalls an der Innenseite der topfförmigen Nabe 19 befindlichen Rastnasen 22 dagegen können von den Zwischenräumen der Zähne aus seitlich in die Führungsnuten 8 eingeschoben werden, wenn die topfförmige Nabe 19 in Richtung des Pfeils 26 relativ zum Antriebskopf 6 verdreht wird. In Figur 5 ist die Endposition der Rastnasen 22 nach dem Verdrehen gezeigt, wobei sich die Rastnasen 22 bereits in Eingriff mit den Führungsnuten 8 befinden und in dieser Position eingerastet sind. Insofern wird durch Aufstecken der topfförmigen Nabe 19 auf den Antriebskopf 6 und Verdrehen der topfförmigen Nabe 19 in Richtung des Pfeils 26 relativ zum Antriebskopf 6 eine erste Bajonettverbindung zwischen dem Antriebskopf 6 und dem Werkzeug ausgebildet. Diese erste Bajonettverbindung kann durch Verdrehen der topfförmigen Nabe 19 relativ zum Antriebskopf 6 entgegen der Richtung des Pfeils 26 wieder gelöst werden.

Die in Figur 1 gezeigte Kupplungseinrichtung 1 kann darüber hinaus zum Anschluss von Zubehörteilen genutzt werden, welche auf den ortsfesten Anschlussring 3 aufgeschoben und mit Hilfe der Bolzen 4 und der Einkerbungen 5 fixiert werden können. Dabei ist es möglich, das sternförmige Mitnahmeprofil 7 des Antriebskopfs 6 dergestalt in Eingriff mit einer entsprechenden Passungsaufnahme des Zubehörteils zu bringen, das eine Eingangswelle des Zubehörteils durch den Antriebskopf 6 antreibbar ist.

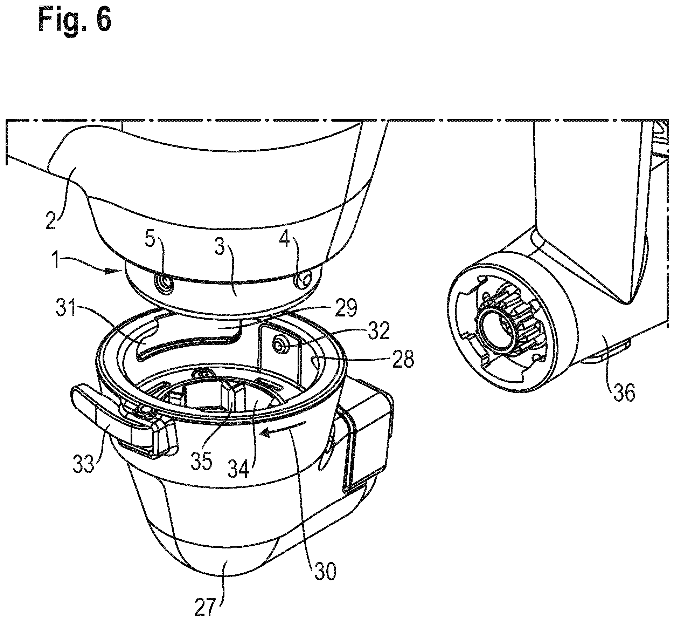

In Figur 6 ist als Beispiel für ein Zubehörteil ein Adaptergetriebe 27 gezeigt, das von unten her auf den ortsfesten Anschlussring 3 der Kupplungseinrichtung 1 aufsteckbar und mittels einer zweiten Bajonettverbindung an der Kupplungseinrichtung 1 fixierbar ist. Hierzu weist das Adaptergetriebe 27 eine Anschlussöffnung 28 auf, mit der das Adaptergetriebe 27 auf den ortsfesten Anschlussring 3 aufschiebbar ist. An der Innenseite der Anschlussöffnung 28 sind Ausnehmungen 29 für die Bolzen 4 vorgesehen. Beim Aufstecken des Adaptergetriebes 27 auf den ortsfesten Anschlussring 3 werden die Bolzen 4 von oben in die Ausnehmungen 29 eingeführt. Anschließend wird das Adaptergetriebe 27 in Richtung des Pfeils 30 relativ zur Kupplungseinrichtung 1 verdreht, so dass die Bolzen 4 in die Endbereiche 31 der Ausnehmungen 29 eingeschoben werden. An der Innenseite der Anschlussöffnung 28 sind darüber hinaus federnd gelagerte kugelförmige Finger 32 angeordnet, die dazu ausgelegt sind, in die Einkerbungen 5 des ortsfesten Anschlussrings 3 einzugreifen. Beim Verdrehen des Adaptergetriebes 27 relativ zur Kupplungseinrichtung 1 in Richtung des Pfeils 30 rasten die federnd gelagerten kugelförmigen Finger 32 in die Einkerbungen 5 des ortsfesten Anschlussrings 3 ein. Nach dem Einrasten kann das Adaptergetriebe 27 zusätzlich mittels eines an der Außenseite des Adaptergetriebes 27 angebrachten Spannhebels 33 fixiert werden. Der Spannhebel 33 umfasst einen Exzenter, und beim Schließen des Spannhebels 33 drückt der am Spannhebel 33 angebrachte Exzenter den zugehörigen kugelförmigen Finger 32 fest in die jeweilige Einkerbung 5. In dieser verriegelten Position ist das Adaptergetriebe 27 relativ zur Kupplungseinrichtung 1 und zum Arm 2 der Küchenmaschine fixiert. Die Bolzen 4 zusammen mit den Ausnehmungen 29 bilden daher eine zweite Bajonettverbindung, durch die das Adaptergetriebe 27 oder ein anderes Zubehörteil lösbar an der Kupplungseinrichtung 1 fixiert werden kann.

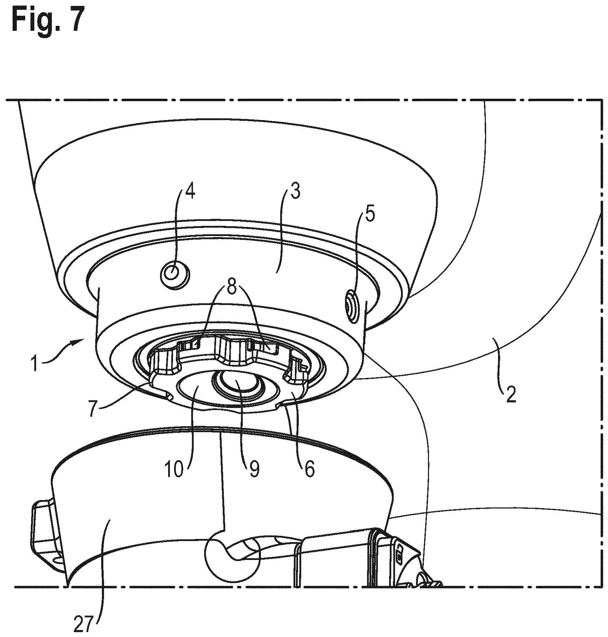

Beim Aufstecken des Adaptergetriebes 27 auf den ortsfesten Anschlussring 3 der Kupplungseinrichtung 1 wird der Anpresskopf 6 mit seinem sternförmigen Mitnahmeprofil 7 in das Innere der Anschlussöffnung 28 eingeschoben. Dies ist insbesondere in Figur 7 gut zu erkennen, in der gezeigt ist, wie das Adaptergetriebe 27 von unten her auf den ortsfesten Anschlussring 3 aufgeschoben wird. In Figur 6 ist gezeigt, dass im Inneren des Adaptergetriebes 27 eine Passungsaufnahme 34 vorgesehen ist, die komplementär zu dem sternförmigen Mitnahmeprofil 7 des Antriebskopfes 6 ausgebildet ist. Die Passungsaufnahme 34 ist mit einer Eingangswelle des Adaptergetriebes 27 verbunden. Wenn das Adaptergetriebe 27 auf den ortsfesten Anschlussring 3 aufgesteckt wird, dann greift der Antriebskopf 6 mit seinem sternförmigen Mitnahmeprofil 7 wie in Figur 6 und Figur 7 erkennbar in die Passungsaufnahme 34 formschlüssig ein, so dass eine drehfeste Kupplung zwischen dem Antriebskopf 6 und der Passungsaufnahme 34 ausgebildet wird. Daher wird beim Fixieren des Adaptergetriebes 27 oder eines anderen Zubehörteils an dem ortsfesten Anschlussring 3 der Kupplungseinrichtung 1 zugleich eine drehfeste Kupplung zwischen dem Antriebskopf 6 und einer Eingangswelle des Adaptergetriebes 27 oder eines anderen Zubehörteils ausgebildet, so dass die Eingangswelle des Adaptergetriebes 27 oder des anderen Zubehörteils durch den Antriebskopf 6 rotierend antreibbar ist. Dabei wird der Eingriff zwischen dem sternförmigen Mitnahmeprofil 7 und der komplementär hierzu ausgebildeten Passungsaufnahme 34 automatisch beim Aufstecken des Adaptergetriebes 27 oder des anderen Zubehörteils ausgebildet, wenn die entsprechenden Stege 35 der Passungsaufnahme 34 in die Zwischenräume zwischen den Zähnen des Mitnahmeprofils 7 eingeschoben werden.

Bei dem in Figur 6 gezeigten Beispiel ist das Adaptergetriebe 27 dazu vorgesehen, die Richtung des auf die Passungsaufnahme 34 in senkrechter Richtung wirkenden Antriebsmoments mittels eines Winkelgetriebes in ein in horizontaler Richtung wirkendes Antriebsmoment umzusetzen. An ein derartiges Winkelgetriebe kann dann beispielsweise ein Zubehörteil angeschlossen werden, das eine horizontale Eingangswelle benötigt, beispielsweise der in Figur 6 gezeigte Fleischwolf 36. Alternativ oder zusätzlich kann das Adaptergetriebe 27 auch dazu vorgesehen sein, die Drehgeschwindigkeit und das Drehmoment des Antriebskopfes 6 mittels einer Übersetzung oder einer Untersetzung in eine im Vergleich dazu höhere oder niedrigere Drehgeschwindigkeit umzusetzen.

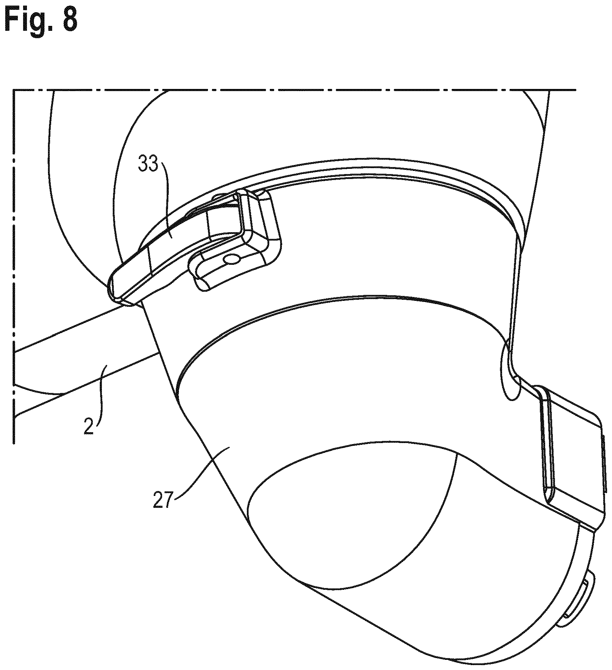

In Figur 8 ist das mittels der zweiten Bajonettverbindung an der Kupplungseinrichtung 1 fixierte Adaptergetriebe 27 zu erkennen. Dabei wurde das Adaptergetriebe 27 zur Fixierung an der Kupplungseinrichtung 1 zusätzlich mittels des Spannhebels 33 verspannt.

Durch die Kupplungseinrichtung 1 ermöglicht über den ersten Bajonettanschluss eine Ankopplung eines auf den Antriebskopf 6 aufgesteckten Werkzeugs und ermöglicht darüber hinaus den Anschluss eines Zubehörteils, wobei über das Mitnahmeprofil 7 des Antriebskopfs 6 eine Eingangswelle des Zubehörteils antreibbar ist. Darüber hinaus kann im Antriebskopf 6 eine Aufnahme 9 für ein Werkzeug bereitgestellt werden, das mittels eines Planetenantriebs antreibbar ist, beispielsweise für ein Rühr- oder Knetwerkzeug. Durch die Kupplungseinrichtung 1 kann daher eine Vielzahl von unterschiedlichen Möglichkeiten zur Ankopplung von Werkzeugen und Zubehörteilen bereitgestellt werden.

### Bezugszeichenliste

- 1: Kupplungseinrichtung
- 2: Arm einer Küchenmaschine
- 3: ortsfester Anschlussring
- 4: Bolzen
- 5: Einkerbungen
- 6: Antriebskopf
- 7: sternförmiges Mitnahmeprofil
- 8: Führungsnuten für ersten Bajonettanschluss
- 9: Aufnahme des Planetenantriebs
- 10: Führungstrichter
- 11: Sonnenrad
- 12: Planetenrad
- 13: innenverzahnter Zahnkranz
- 14: Gehäuse
- 15: Drehachse für Planetenantrieb
- 16: zentrale Symmetrieachse
- 17: Planetenträger
- 18: Kugellager
- 19: topfförmige Nabe
- 20: Knetflügel
- 21: Führungsrippen
- 22: Rastnasen für erste Bajonettverbindung
- 23: Drehrichtung
- 24: Griffmulden
- 25: Schaft des Werkzeugs
- 26: Pfeil
- 27: Adaptergetriebe
- 28: Anschlussöffnung
- 29: Ausnehmungen für zweite Bajonettverbindung
- 30: Pfeil
- 31: Endbereiche der Ausnehmung
- 32: kugelförmiger Finger
- 33: Spannhebel
- 34: Passungsaufnahme
- 35: Stege der Passungsaufnahme
- 36: Fleischwolf

## Patentansprüche

1. Eine Kupplungseinrichtung (1) für eine Küchenmaschine,
wobei die Kupplungseinrichtung (1) einen Antriebskopf (6) aufweist, der mit einer abtriebsseitigen Welle der Küchenmaschine verbunden ist,
und wobei die Kupplungseinrichtung (1) ein ganz oder teilweise um den Antriebskopf (6) herum angeordnetes ortsfestes Anschlussstück (3) zur mechanischen Kopplung eines Zubehörteils (27) mit der Kupplungseinrichtung (1) aufweist,
**dadurch gekennzeichnet, dass**
der Antriebskopf (6) einen ersten Bajonettanschluss zur drehfesten Kupplung des Antriebskopfes (6) mit einem Werkzeug aufweist, und
dass der Antriebskopf (6) ein Mitnahmeprofil (7) aufweist.

2. Eine Kupplungseinrichtung (1) nach Anspruch 1, **dadurch gekennzeichnet, dass** das ortsfeste Anschlussstück (3) als den Antriebskopf (6) umschließender Anschlussring ausgebildet ist.

3. Eine Kupplungseinrichtung (1) nach Anspruch 1 oder Anspruch 2, **dadurch gekennzeichnet, dass** das Mitnahmeprofil (7) dazu ausgebildet ist, eine drehfeste Kupplung des Antriebskopfes (6) mit einer Welle eines Zubehörteils (27) auszubilden.

4. Eine Kupplungseinrichtung (1) nach einem der Ansprüche 1 bis 3, **dadurch gekennzeichnet, dass** das Mitnahmeprofil (7) eine Mehrzahl von Zähnen zur drehfesten Kupplung mit einer Welle eines Zubehörteils (27) aufweist.

5. Eine Kupplungseinrichtung (1) nach einem der Ansprüche 1 bis 4, **dadurch gekennzeichnet, dass** der erste Bajonettanschluss am oder im Antriebskopf (6) angeordnete Führungsnuten (8) umfasst, die dazu ausgelegt sind, mit einem auf den Antriebskopf (6) aufgesteckten Werkzeug eine erste Bajonettverbindung auszubilden.

6. Eine Kupplungseinrichtung (1) nach einem der Ansprüche 1 bis 5, **dadurch gekennzeichnet, dass** das Mitnahmeprofil (7) eine Mehrzahl von Zähnen aufweist, wobei der erste Bajonettanschluss Führungsnuten (8) umfasst, die sich in die Zähne des Mitnahmeprofils (7) hinein erstrecken.

7. Eine Kupplungseinrichtung (1) nach einem der Ansprüche 1 bis 6, **dadurch gekennzeichnet, dass** das Mitnahmeprofil (7) eine Mehrzahl von Zähnen aufweist, wobei die Zähne jeweils Führungsnuten (8) zur Aufnahme von Rastnasen (22) eines aufgesteckten Werkzeugs aufweisen.

8. Eine Kupplungseinrichtung (1) nach einem der Ansprüche 1 bis 7, **dadurch gekennzeichnet, dass** auf den Antriebskopf (6) der Kupplungseinrichtung (1) ein Werkzeug aufsteckbar ist, wobei über den ersten Bajonettanschluss des Antriebskopfes (6) eine drehfeste Kupplung zwischen dem Antriebskopf (6) und dem Werkzeug ausbildbar ist.

9. Eine Kupplungseinrichtung (1) nach einem der Ansprüche 1 bis 8, **dadurch gekennzeichnet, dass** das ortsfeste Anschlussstück (3) einen zweiten Bajonettanschluss zur ortsfesten Kupplung des ortsfesten Anschlussstücks (3) mit einem aufgesteckten Zubehörteil (27) aufweist.

10. Eine Kupplungseinrichtung (1) nach einem der Ansprüche 1 bis 9, **dadurch gekennzeichnet, dass** an die Kupplungseinrichtung (1) ein Zubehörteil (27) anschließbar ist, wobei das Zubehörteil (27) mit dem ortsfesten Anschlussstück (3) der Kupplungseinrichtung (1) mechanisch koppelbar ist.

11. Eine Kupplungseinrichtung (1) nach einem der Ansprüche 1 bis 10, **dadurch gekennzeichnet, dass** das Mitnahmeprofil (7) des Antriebskopfes (6) dazu ausgelegt ist, bei der mechanischen Kopplung des Zubehörteils (27) mit dem Anschlussstück (3) in eine zugehörige Passungsaufnahme (34) des Zubehörteils (27) einzugreifen.

12. Eine Kupplungseinrichtung (1) nach einem der Ansprüche 1 bis 11, **dadurch gekennzeichnet, dass** im Antriebskopf (6) eine rotierbar gelagerte Aufnahme (9) angeordnet ist, die durch einen Planetenantrieb antreibbar ist und in die ein Werkzeug einsteckbar ist.

13. Eine Kupplungseinrichtung (1) nach einem der Ansprüche 1 bis 12, **dadurch gekennzeichnet, dass** der Antriebskopf (6) mit einem Planetenträger (17) einer Planetengetriebestufe verbunden oder an einen Planetenträger (17) einer Planetengetriebestufe angeformt ist.

14. Eine Küchenmaschine, welche eine Kupplungseinrichtung (1) nach einem der Ansprüche 1 bis 13 umfasst.

15. Ein Antriebskopf (6) zum Antrieb eines Werkzeugs in einer Küchenmaschine, wobei der Antriebskopf (6) einen ersten Bajonettanschluss zur drehfesten Kupplung des Antriebskopfes (6) mit dem Werkzeug aufweist,
**dadurch gekennzeichnet, dass**
der Antriebskopf (6) ein Mitnahmeprofil (7) mit einer Mehrzahl von Zähnen aufweist, wobei der erste Bajonettanschluss Führungsnuten (8) zur Kopplung mit dem Werkzeug umfasst, wobei die Führungsnuten (8) in den Zähnen des Mitnahmeprofils (7) ausgebildet sind.

## Claims

1. Coupling device (1) for a kitchen appliance,
wherein the coupling device (1) has a drive head (6), which is connected to an output-side shaft of the kitchen appliance,
and wherein the coupling device (1) has a connection piece (3) which is arranged entirely or partially around the drive head (6) with a fixed location, for mechanically coupling an accessory part (27) to the coupling device (1),
**characterised in that**
the drive head (6) has a first bayonet connection for the torque-proof coupling of the drive head (6) to a tool, and
that the drive head (6) has a carrying profile (7).

2. Coupling device (1) according to claim 1, **characterised in that** the connection piece (3) with a fixed location is embodied as a connection ring surrounding the drive head (6).

3. Coupling device (1) according to claim 1 or claim 2, **characterised in that** the carrying profile (7) is embodied to embody a torque-proof coupling of the drive head (6) to a shaft of an accessory part (27).

4. Coupling device (1) according to one of claims 1 to 3, **characterised in that** the carrying profile (7) has a plurality of teeth for coupling to a shaft of an accessory part (27) at a fixed location.

5. Coupling device (1) according to one of claims 1 to 4, **characterised in that** the first bayonet connection comprises guide grooves (8) arranged on or in the drive head (6), which are designed to embody a first bayonet connection together with a tool plugged onto the drive head (6).

6. Coupling device (1) according to one of claims 1 to 5, **characterised in that** the carrying profile (7) has a plurality of teeth, wherein the first bayonet connection comprises guide grooves (8) which extend into the teeth of the carrying profile (7).

7. Coupling device (1) according to one of claims 1 to 6, **characterised in that** the carrying profile (7) has a plurality of teeth, wherein the teeth each have guide grooves (8) for receiving latching lugs (22) of a plugged-in tool.

8. Coupling device (1) according to one of claims 1 to 7, **characterised in that** a tool is able to be plugged onto the drive head (6) of the coupling device (1), wherein a torque-proof coupling between the drive head (6) and the tool is able to be embodied via the first bayonet connection of the drive head (6).

9. Coupling device (1) according to one of claims 1 to 8, **characterised in that** the connection piece (3) with a fixed location has a second bayonet connection for coupling the connection piece (3) with a fixed location to a plugged-on accessory part (27) at a fixed location.

10. Coupling device (1) according to one of claims 1 to 9, **characterised in that** an accessory part (27) is able to be connected to the coupling device (1), wherein the accessory part (27) is able to be mechanically coupled to the connection piece (3) with a fixed location of the coupling device (1).

11. Coupling device (1) according to one of claims 1 to 10, **characterised in that** the carrying profile (7) of the drive head (6) is designed, during the mechanical coupling of the accessory part (27) to the connection piece (3), to engage into an associated fitting receptacle (34) of the accessory part (27).

12. Coupling device (1) according to one of claims 1 to 11, **characterised in that** arranged in the drive head (6) is a rotatably mounted receptacle (9), which is able to be driven by a planetary drive and into which a tool is able to be plugged.

13. Coupling device (1) according to one of claims 1 to 12, **characterised in that** the drive head (6) is connected to a planetary carrier (17) of a planetary gear stage or is moulded onto a planetary carrier (17) of a planetary gear stage.

14. Kitchen appliance, which comprises a coupling device (1) according to one of claims 1 to 13.

15. Drive head (6) for driving a tool in a kitchen appliance,
wherein the drive head (6) has a first bayonet connection for the torque-proof coupling of the drive head (6) to the tool,
**characterised in that**
the drive head (6) has a carrying profile (7) with a plurality of teeth,
wherein the first bayonet connection comprises guide grooves (8) for coupling to the tool, wherein the guide grooves (8) are embodied in the teeth of the carrying profile (7).

## Revendications

1. Dispositif d'accouplement (1) pour un robot ménager,
le dispositif d'accouplement (1) présentant une tête d'entraînement (6) qui est reliée à un arbre, côté sortie, du robot ménager,
et le dispositif d'accouplement (1) présentant une pièce de raccordement (3) stationnaire disposée entièrement ou en partie autour de la tête d'entraînement (6) pour l'accouplement mécanique d'un accessoire (27) au dispositif d'accouplement (1), **caractérisé en ce que**
la tête d'entraînement (6) présente un premier raccord à baïonnette pour l'accouplement, solidaire en rotation, de la tête d'entraînement (6) à un outil, et
**en ce que** la tête d'entraînement (6) présente un profil d'entraînement (7).

2. Dispositif d'accouplement (1) selon la revendication 1, **caractérisé en ce que** la pièce de raccordement (3) stationnaire est réalisée comme anneau de raccordement entourant la tête de raccordement (6).

3. Dispositif d'accouplement (1) selon la revendication 1 ou 2, **caractérisé en ce que** le profil d'entraînement (7) est réalisé pour former un accouplement, solidaire en rotation, de la tête d'entraînement (6) à un arbre d'un accessoire (27).

4. Dispositif d'accouplement (1) selon l'une quelconque des revendications 1 à 3, **caractérisé en ce que** le profil d'entraînement (7) présente une pluralité de dents pour l'accouplement solidaire en rotation à un arbre d'un accessoire (27).

5. Dispositif d'accouplement (1) selon l'une quelconque des revendications 1 à 4, **caractérisé en ce que** le premier raccord à baïonnette comprend des rainures de guidage (8) disposées sur ou dans la tête d'entraînement (6), lesquelles sont conçues pour former une première liaison à baïonnette avec un outil emboîté sur la tête d'entraînement (6).

6. Dispositif d'accouplement (1) selon l'une quelconque des revendications 1 à 5, **caractérisé en ce que** le profil d'entraînement (7) présente une pluralité de dents, le premier raccord à baïonnette comprenant des rainures de guidage (8) qui s'étendent dans les dents du profil d'entraînement (7).

7. Dispositif d'accouplement (1) selon l'une quelconque des revendications 1 à 6, **caractérisé en ce que** le profil d'entraînement (7) présente une pluralité de dents, les dents présentant respectivement des rainures de guidage (8) pour le logement d'ergots d'encliquetage (22) d'un outil emboîté.

8. Dispositif d'accouplement (1) selon l'une quelconque des revendications 1 à 7, **caractérisé en ce qu'**un outil est emboîtable sur la tête d'entraînement (6) du dispositif d'accouplement (1), un accouplement solidaire en rotation pouvant être formé entre la tête d'entraînement (6) et l'outil par l'intermédiaire du premier raccord à baïonnette de la tête d'entraînement (6).

9. Dispositif d'accouplement (1) selon l'une quelconque des revendications 1 à 8, **caractérisé en ce que** la pièce de raccordement (3) stationnaire présente un deuxième raccord à baïonnette pour l'accouplement stationnaire de la pièce de raccordement (3) stationnaire à un accessoire (27) emboîté.

10. Dispositif d'accouplement (1) selon l'une quelconque des revendications 1 à 9, **caractérisé en ce qu'**un accessoire (27) est raccordable au dispositif d'accouplement (1), l'accessoire (27) pouvant être mécaniquement couplé à la pièce de raccordement (3) stationnaire du dispositif d'accouplement (1).

11. Dispositif d'accouplement (1) selon l'une quelconque des revendications 1 à 10, **caractérisé en ce que** le profil d'entraînement (7) de la tête d'entraînement (6) est conçu pour avoir prise dans un logement d'ajustement (34) correspondant de l'accessoire (27) lors d'un accouplement mécanique de l'accessoire (27) à la pièce de raccordement (3).

12. Dispositif d'accouplement (1) selon l'une quelconque des revendications 1 à 11, **caractérisé en ce qu'**un logement (9) logé de manière rotative est disposé dans la tête d'entraînement (6), lequel est entraînable au moyen d'un entraînement planétaire et dans lequel un outil est emboîtable.

13. Dispositif d'accouplement (1) selon l'une quelconque des revendications 1 à 12, **caractérisé en ce que** la tête d'entraînement (6) est reliée à un support planétaire (17) d'un étage d'engrenage planétaire ou est formée sur un support planétaire (17) d'un étage d'engrenage planétaire.

14. Robot ménager lequel comprend un dispositif d'accouplement (1) selon l'une quelconque des revendications 1 à 13.

15. Tête d'entraînement (6) destinée à l'entraînement d'un outil dans un robot ménager, la tête d'entraînement (6) présentant un premier raccord à baïonnette pour l'accouplement, solidaire en rotation, de la tête d'entraînement (6) à l'outil,
**caractérisée en ce que**
la tête d'entraînement (6) présente un profil d'entraînement (7) doté d'une pluralité de dents,
le premier raccord à baïonnette comprenant des rainures de guidage (8) pour l'accouplement à l'outil, les rainures de guidage (8) étant réalisées dans les dents du profil d'entraînement (7).
